# FASCICULE DE BREVET EUROPEEN

(11) **EP 0 667 802 B1**
(45) Date de publication et mention de la délivrance du brevet: **29.07.1998**
(21) Numéro de dépôt: 94926274.5
(22) Date de dépôt: 05.09.1994
(51) Int. Cl.: B01D 46/02, B01D 46/42

(54) **FILTRES A MANCHES POUR LA FILTRATION DE GAZ EMPOUSSIERE**
FILTERTASCHEN ZUM FILTERN VON STAUBHALTIGEN GASEN
BAG FILTERS FOR DUST-LADEN GAS FILTRATION

(30) Priorité: 06.09.1993 FR 9310570; 06.09.1993 FR 9310571
(43) Date de publication de la demande: 23.08.1995
(73) Titulaire: HAMON INDUSTRIE THERMIQUE, f-92300 Levallois-Perret (FR)
(72) Inventeur: MONTACLAIR, Jean-Paul, F-78300 Poissy (FR); CARRE, Serge, F-78800 Houilles (FR)
(74) Mandataire: Bérogin, Francis
(86) Numéro de dépôt international: FR9401041
(87) Numéro de publication internationale: WO9507130

(56) Documents cités:
- EP-A- 0 504 422
- DE-A- 3 045 524
- DE-A- 4 016 206
- US-A- 3 354 620
- US-A- 4 808 203

## Description

L'invention concerne des perfectionnements apportés aux filtres à manches de filtrage de gaz empoussiéré, utilisés pour la filtration de l'air rejeté vers l'extérieur, afin de ne pas polluer l'environnement, et l'assainissement de locaux industriels et/ou commerciaux, afin d'améliorer les conditions de travail du personnel ainsi que la productivité et les performances de machines générant des poussières, mais sensibles à leur présence dans l'air environnant, pour procurer ainsi un environnement de qualité au personnel et aux machines.

Les filtres à manches connus à cet effet comprennent, généralement, un capot d'arrivée de gaz empoussiéré, en général de l'air, un filtre proprement dit, un capot de gaz dépoussiéré, un dispositif de décolmatage ainsi qu'un dispositif d'évacuation des poussières filtrées.

Le capot d'arrivée de gaz empoussiéré, dont l'emplacement et la forme peuvent être adaptés à toutes les configurations, peut être de forme parallèlépipédique, et disposé au dessus du filtre proprement dit si ce dernier comporte des manches de filtration horizontales.

Le filtre proprement dit comporte une enceinte, aménagée en caisson étanche, contenant une batterie de manches de filtrage tubulaires, par exemple de section sensiblement cylindrique ou ovale, à paroi filtrante, s'étendant parallèlement entre elles et disposées soit verticalement, soit horizontalement, entre une plaque à trous et, selon une réalisation particulière de l'état de la technique, des plaques et/ou tiges de support et des tiges ondulées de positionnement voisines du fond du caisson, du côté opposé à la plaque à trous. L'air empoussiéré pénètre dans le caisson en provenance du capot d'arrivée, puis est aspiré à l'intérieur des manches constituées d'un média filtrant souple, perméable à l'air (en général un feutre aiguilleté), sur lequel se déposent les poussières de diamètre supérieur à 0,5 µm, voire même 0,1 µm. Les poussières arrêtées sur la surface latérale externe des manches sont ensuite chassées des manches par une opération de décolmatage, par soufflage de gaz à contre courant dans les manches.

Le capot de gaz dépoussiéré, se raccordant à une conduite de recirculation du gaz, est en général de forme parallèlépipédique et accolé au caisson du filtre, en regard de la plaque à trous, pour collecter le gaz propre sortant des manches de filtrage par leurs ouvertures d'extrémité retenue chacune avec étanchéité, par exemple par un bourrelet d'extrémité, dans un trou respectif de la plaque à trous. Le capot de gaz dépoussiéré est muni de portes d'accès à la plaque à trous, pour les opérations de maintenance et d'entretien sur les manches de filtrage.

Le média filtrant tubulaire de chaque manche est supporté, entre la plaque à trous et les moyens de support et de positionnement voisins du fond du caisson, par une armature constituée d'un mannequin grillagé, par exemple en fils métalliques longitudinaux et transversaux soudés. Ces supports grillagés ont une forme spéciale, avec une section transversale allongée et orientée verticalement, et peuvent présenter un toit à deux pans inclinés se prolongeant vers le bas par des parois latérales ondulées. Ces mannequins grillagés, sur lesquels les manches de filtrage tubulaires de section transversale sensiblement ovale à grand axe vertical sont emmanchées, non seulement supportent les médias filtrants en service, en préservant une faible déformation mécanique de ces médias, pour garder intactes leurs qualités de rétention des fines poussières, et en évitant que des manches froissées ne viennent en contact avec des manches voisines, mais facilitent également la mise en place des manches dans la plaque à trous et sur les moyens de support et positionnement voisins du fond, ainsi que le retrait des manches. Celles-ci, grâce aux mannequins qu'elles entourent, conservent une section centrale d'écoulement non nulle, malgré la pression du gaz empoussiéré qui tend à resserrer chaque manche sur elle-même, et la partie supérieure en forme de toit des manches facilite la chute des poussières vers la trémie collectrice, dans le cas de manches horizontales.

Ces filtres à manches connus présentent de nombreux inconvénients du fait de la structure des manches dont ils sont équipés et des moyens de retenue et de positionnement de la partie arrière des manches, du côté du fond du filtre. En effet, chaque manche est un unique tronçon tubulaire, dont l'extrémité arrière, du côté opposé à son ouverture retenue dans un trou de la plaque à trous, peut être fermée par un fond cousu. Le fil de couture doit donc être choisi en fonction de l'agressivité chimique du gaz à dépoussiérer, laquelle agressivité chimique peut varier d'une installation à l'autre. La pose d'un fond cousu est un travail délicat, nécessitant une intervention manuelle ou mécanique coûteuse. Le fond cousu est également une zone à risque de fuite, car les trous de passage des fils de couture sont d'une taille supérieure à celle de poussières à arrêter, de sorte que tous les trous de couture doivent être rebouchés avec un produit spécial, si l'on veut garantir une certaine qualité du gaz dépoussiéré.

En cas de fuite dans une manche (par exemple au niveau d'une déchirure du média filtrant sur une extrémité d'un fil métallique de son mannequin grillagé), la manche percée se gonfle et se remplit de gaz empoussiéré. Comme les manches de filtrage sont disposées à proximité immédiate les unes des autres, une manche percée et gonflée ne peut être retirée sans démonter également plusieurs manches adjacentes, ce qui conduit à boucher la manche percée au niveau de son ouverture dans la plaque à trous, avec un tampon d'obturation, en attendant un arrêt planifié pour remplacer les manches percées.

Le remplacement d'une manche du type ci-dessus est une opération délicate, car il faut, le cas échéant, intervenir au niveau du bourrelet d'étanchéité et de retenue sur la plaque à trous, et surtout guider avec précision la manche de remplacement, à sa mise en place, pour que son fond et l'extrémité correspondante du mannequin grillagé viennent se placer convenablement, par exemple dans l'ondulation correspondante de la tige ondulée des moyens de support et de positionnement voisins du fond du caisson. Compte tenu de la grande longueur des manches, jusqu'à 2,8 m, pour une largeur de 50 mm et une hauteur variant entre 150 et 250 mm, on comprend que l'opérateur puisse facilement disposer le fond d'une manche dans une ondulation voisine de celle devant la recevoir, et que cette erreur de positionnement, qui se reporte de manche à manche jusqu'en fin de rangée, puisse n'être perçue que tardivement, ce qui oblige à des manipulations délicates, longues et répétées.

De plus, la fabrication industrielle des manches impose deux à trois longueurs standards de celles-ci, pour limiter leur cout de réalisation. La production des manches de filtrage doit être effectuée en usine avant leur montage et, en cas de chantier de rénovation ou de changement de manche sur une installation existante, il est impossible de s'adapter sur le site à la longueur des manches de l'installation existante.

Par ailleurs, dans d'autres exemples de l'état de la technique tels que dans le document US-A-3 354 620, le filtre à manches comprend un jeu de manches constituées chacune d'un tronçon tubulaire fermé à l'une de ses extrémités. Les tronçons sont immobilisés par paire, par leur extrémité fermée, sur des moyens de positionnement et sont disposés longitudinalement par rapport au courant de gaz empoussiéré. Le filtre présente les mêmes inconvénients que les filtres décrits précédemment dans la mesure où il est difficile de remplacer une manche défectueuse.

Un but de l'invention est de remédier à ces inconvénients des manches de filtrage connues, et de proposer des manches de structure simple, de réalisation économique, faciles à mettre en place et à retirer, et utilisables en garantissant l'intégrité du média filtrant, sans qu'il soit nécessaire de rapporter un fond cousu.

A cet effet, l'invention propose un filtre à manches de filtrage de gaz empoussiéré, dans lequel plusieurs manches s'étendent dans une enceinte entre une plaque à trous de l'enceinte et des moyens de support et positionnement voisins du fond de l'enceinte, et sont disposées sensiblement transversalement à un courant de gaz empoussiéré pénétrant dans l'enceinte, chaque manche tubulaire comportant une paroi de filtration souple, perméable au gaz mais retenant des poussières transportées par le gaz qui pénètre dans la manche et s'écoule dépoussiéré dans celle-ci jusqu'à une ouverture d'extrémité de la paroi qui débouche dans un trou de la plaque à trous, et le filtre selon l'invention se caractérise en ce qu'au moins une manche est constituée d'un tube en U et est montée dans l'enceinte de sorte qu'elle présente deux tronçons tubulaires de filtration, sensiblement parallèles et reliés l'un à l'autre par une base disposée vers le fond de l'enceinte et en ce que les ouvertures d'extrémité des deux tronçons tubulaires de filtration de chaque manche en U débouchent côte à côte dans un même trou de la plaque à trous.

Le tube de chaque manche en U est avantageusement coupé à la longueur voulue dans un tube continu, sans bourrelet, puis plié en U à la forme voulue.

La coupe à longueur et le pliage en U peuvent être effectués aussi bien en usine que sur chantier. La structure de tube en U ainsi donnée à la manche de filtrage est moins coûteuse que les réalisations connues, et sans fond cousu, à l'origine de nombreux inconvénients.

Le tube, dans lequel la manche est découpée, peut être de section quelconque, et de préférence sensiblement ovale, comme les manches actuellement utilisées, ou à la rigueur de section circulaire.

Pour faciliter la mise en place et le retrait des manches en U, et pour permettre le positionnement sans risque d'erreur de la base du U sur les moyens de support et de positionnement du fond de l'enceinte, les ouvertures d'extrémité des deux tronçons tubulaires de filtration de chaque manche en U débouchent côte à côte dans un même trou de la plaque à trous. Il en résulte que la plaque à trous doit être munie de trous d'une section supérieure à celle des trous des plaques connues, et par exemple avoir une largeur de 130 mm, au lieu de 50 mm, pour une hauteur inchangée de 150 à 250 mm. Il en résulte une meilleure accessibilité à la mise en place comme au retrait des manches.

Avantageusement, chaque manche en U est montée dans l'enceinte de sorte que sa base soit suffisamment resserrée pour former un joint relativement étanche au gaz entre les deux tronçons tubulaires de filtration.

De plus, chaque manche en U peut être supportée entre la plaque à trous et les moyens de support et de positionnement du fond de l'enceinte par une armature constituée de deux mannequins ajourés introduits chacun dans l'un respectivement des deux tronçons tubulaires de filtration, chaque mannequin pouvant être du type connu, c'est-à-dire grillagé et réalisé par exemple en fils métalliques soudés.

De plus, dans les filtres à manches de l'état de la technique, les moyens de support et de positionnement à tiges ondulées ne conviennent pas à la réception des bases ou parties arrière de manches en U, du type proposé par l'invention.

Un autre but de l'invention est donc de remédier à cet inconvénient des filtres à manches connus, et de proposer des moyens de support et de positionnement de la partie arrière de manches de filtrage en U, avec deux tronçons de filtration tubulaires reliés par une base disposée vers le fond du caisson de filtre.

A cet effet, l'invention propose que, pour chaque manche en U, les moyens de support et de positionnement comprennent au moins une barre de support, du côté du fond de l'enceinte du filtre à manches, et un dispositif de support, positionnement et fermeture étanche de la base de la manche en U, ce dispositif comprenant :
- pour chaque tronçon de filtration, un embout comportant un fond et une jupe périphérique, qui s'emboîte élastiquement par sa jupe autour de l'extrémité arrière du mannequin en s'insérant entre ce dernier et le tronçon de filtration, et dont le fond constitue un fond de fermeture étanche au gaz de l'extrémité arrière dudit tronçon de filtration,
- une épingle externe, de structure sensiblement en U, qui s'emboîte élastiquement sur la partie arrière de la manche de filtrage, de sorte à pincer la paroi de l'extrémité arrière de chaque tronçon de filtration entre l'épingle et l'embout correspondant, chaque branche de l'épingle en U présentant, du côté opposé à la manche de filtrage, des moyens d'accrochage sur au moins une barre de support et positionnement solidaire du fond du filtre à manches.

Ainsi, en bouchant l'extrémité arrière du mannequin et en pinçant élastiquement la paroi de la partie arrière de la manche entre l'embout, à l'intérieur, et l'épingle en U, à l'extérieur, on assure la fermeture étanche vers l'arrière de la manche, sans qu'il soit nécessaire de coudre un fond. De plus, l'épingle externe en U permet, par ses moyens d'accrochage, de supporter et positionner la partie arrière de la manche sur au moins une barre de support, qui peut être rectiligne et munie de butées régulièrement espacées, pour assurer le positionnement vers le fond du caisson de filtre.

La manche de filtrage étant du type en U, le dispositif comprend avantageusement de plus une cale interne, élastiquement déformable, s'emboîtant élastiquement dans l'épingle en U entre les extrémités arrière des deux tronçons de filtration engagées dans l'épingle en U, de façon à pincer élastiquement lesdites extrémités arrière entre, à l'extérieur, l'épingle en U et la cale, et, à l'intérieur, les embouts emboîtés dans lesdites extrémités arrière.

Afin de faciliter la mise en place d'une manche neuve et le retrait d'une manche usée, en améliorant leur guidage longitudinal, le dispositif comprend avantageusement de plus un patin de glissement, fixé sous la base de l'épingle en U. Ainsi, ce patin repose et peut glisser sur la manche inférieure lors de la mise en place ou du retrait d'une manche, ce qui est particulièrement avantageux au retrait, car une manche détériorée est relativement lourde, puisqu'encrassée à l'intérieur.

Afin que les pièces telles que chaque embout, l'épingle en U et la cale centrale, puissent être fixées par emboîtement élastique pour se maintenir en place, ces pièces sont de préférence réalisées en tôle emboutie, en particulier en tôle mince d'acier inoxydable, procurant un effet de ressort permettant aux pièces de s'adapter aux épaisseurs variables de la paroi tubulaire des manches, ainsi qu'aux tolérances de positionnement et de réalisation de ces pièces elles-mêmes, ainsi que du ou des mannequins.

En outre, chaque branche de l'épingle en U se prolonge avantageusement, du côté opposé à la manche de filtrage, par une aile contre-coudée en saillie vers l'autre branche de l'épingle en U, et conformée en crochet d'accrochage sur la barre de support et de positionnement, de sorte à raidir l'épingle et que le support et le positionnement sont toujours assurés par des contacts métal sur métal, sans provoquer de pincement de la paroi de la manche.

Dans des modes de réalisation préférés, on a recours, en outre, à l'une et/ou à l'autre des dispositions suivantes :
- le fond de chaque embout présente une déformation centrale de raidissement, améliorant l'emboîtement élastique de l'embout sur le mannequin,
- chaque embout s'accroche sur le mannequin ajouré correspondant par au moins une patte se logeant dans une lumière du mannequin, chaque patte d'accrochage étant réalisée par un crevé dans la jupe de l'embout et pliée au montage,
- la cale interne est un profilé creux sensiblement en forme de O ouvert selon sa génératrice, dans sa partie tournée vers la base de l'épingle en U,
- la cale élastiquement déformable s'engage dans l'épingle en U jusqu'à venir en appui sur la base de cette épingle,
- le bord des branches de l'épingle en U et de la cale élastique qui est tourné du côté opposé aux moyens d'accrochage de l'épingle présente une nervure en saillie vers la jupe des embouts, légèrement en avant du bord libre de cette jupe.

D'autres avantages et caractéristiques de l'invention résultent de la description donnée ci-dessous, à titre non limitatif, d'un exemple de réalisation décrit en référence aux dessins sur lesquels :
- la figure 1 représente schématiquement, en partie en plan et en partie en coupe horizontale, une manche de filtrage en U disposée dans un caisson de filtre,
- la figure 2 représente partiellement en élévation frontale la plaque à trous du caisson de filtre de la figure 1 et dans l'un des trous de laquelle les deux tronçons tubulaires de filtration d'une manche en U apparaissent côte à côte,
- la figure 3 est une vue schématique en partie en coupe et en partie en élévation latérale d'un embout monté à la partie arrière d'un tronçon de filtration d'une manche,
- la figure 4 est une vue en coupe selon IV-IV de la figure 3, montrant l'embout monté sur l'extrémité arrière du mannequin,
- la figure 5 est une vue en coupe selon V-V de la figure 3,
- la figure 6 est une vue schématique en partie en élévation latérale et en partie en coupe, montrant la partie arrière d'une manche en U, retenue et positionnée par le dispositif de l'invention,
- la figure 7 est une coupe transversale selon VII-VII de la figure 6, et
- la figure 8 est une coupe selon VIII-VIII de la figure 6.

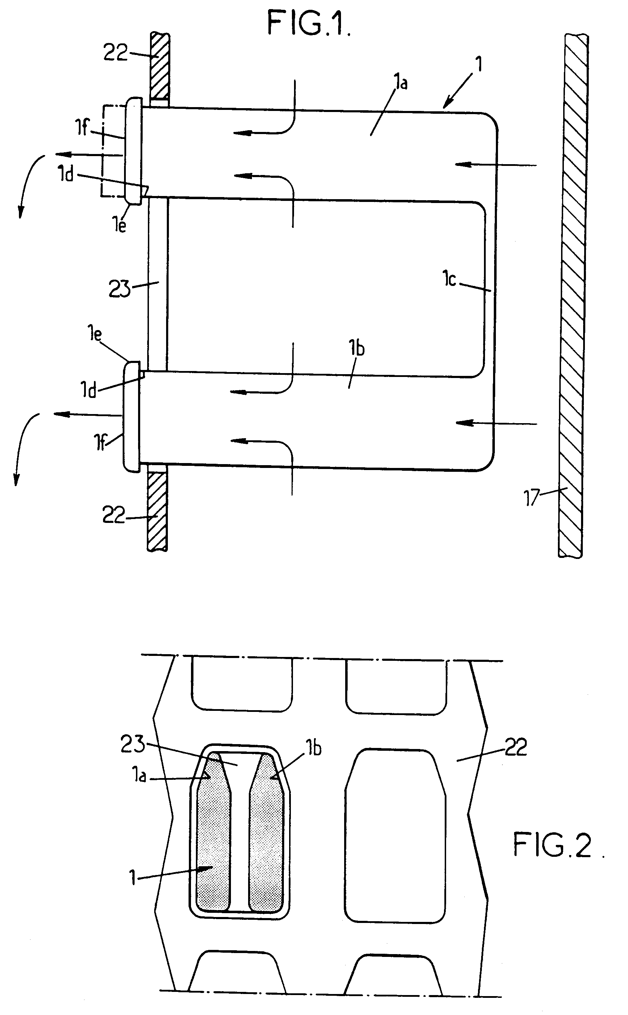

Sur les figures 1 et 2, on a représenté schématiquement, sans tenir compte de l'échelle ni des proportions, une plaque à trous 22 verticale, qui est percée d'un grand nombre de trous régulièrement répartis en rangées verticales et horizontales, tels que le trou 23, sensiblement de forme rectangulaire à partie supérieure trapézoïdale, d'une largeur d'environ 130 mm et d'une hauteur de 150 à 400 mm.

Sur la figure 1, on a représenté le fond vertical 17, qui est parallèle à la plaque 22 et opposé à cette dernière dans l'enceinte parallèlépipédique conformée en caisson de filtre.

Des manches de filtrage 1, constituées chacune d'un tube en U, et dont une seule est représentée sur les figures 1 et 2, sont montées dans le caisson de filtre. Chaque manche 1 est un élément tubulaire, de section transversale sensiblement ovale, en un média filtrant souple apte à dépoussiérer de l'air ou tout autre gaz, et qui a été simplement coupé à la longueur voulue dans un rouleau de grande longueur d'un tube continu sans bourrelet ni couture de ce média filtrant. La longueur découpée est directement utilisable, et présente une meilleure résistance mécanique et chimique que les manches de filtrage de l'état de la technique, du fait de l'absence de zone à risque ou affaiblie. De plus, l'élément tubulaire est découpé à la longueur nécessaire pour s'adapter sans aucune difficulté à n'importe quelle dimension disponible entre la plaque à trous 22 et le fond 17 du caisson de filtre.

A partir de l'élément tubulaire découpé à la longueur voulue, en usine ou sur chantier, il suffit de plier l'élément en U pour obtenir une manche 1 utilisable, qui présente deux tronçons tubulaires de filtration 1a et 1b, sensiblement parallèles et de même longueur, et reliés l'un à l'autre par une base 1c. Les extrémités libres 1d des deux tronçons de filtration 1a et 1b sont engagées dans un même trou 23, et retroussés chacun sur lui-même en le pour être retenus de manière étanche sur une coiffe (non représentée) de liaison mécanique à la plaque 22 et d'obturation du trou 23 autour des extrémités 1d. Ainsi, les ouvertures d'extrémité 1f des deux tronçons de filtration 1a et 1b d'une même manche 1 débouchent sensiblement côte à côte dans un même trou 23 de la plaque 22.

Le gaz (par exemple de l'air) circule selon les flèches sur la figure 1 : pénétrant à l'état empoussiéré dans le caisson, entre la plaque 22 et le fond 17, il traverse la paroi filtrante souple de la manche 1 en déposant les poussières transportées sur la face externe de cette manche 1, puis il s'écoule dépoussiéré en direction axiale dans les deux tronçons 1a et 1b et sort par les ouvertures 1f dans un capôt collecteur de gaz propre (non représenté).

En cas de percement de sa paroi, la manche 1 se gonfle et se remplit de gaz empoussiéré. Il suffit alors de retirer une manche 1 adjacente par le trou 23 correspondant, pour accéder à la manche 1 gonflée entre la plaque 22 et le fond 17, et la déchirer, ce qui permet de l'extraire sans difficulté par son trou 23. La taille des trous 23 permet d'effectuer ces opérations sous contrôle visuel de l'opérateur. Après remplacement de la manche défectueuse et remise en place de la manche 1 adjacente, l'efficacité du filtre est rétablie. Ceci est obtenu par des opérations rapides et simples, ne nécessitant pas l'intervention d'un personnel spécialisé, et il n'est pas nécessaire d'obturer les ouvertures 1f.

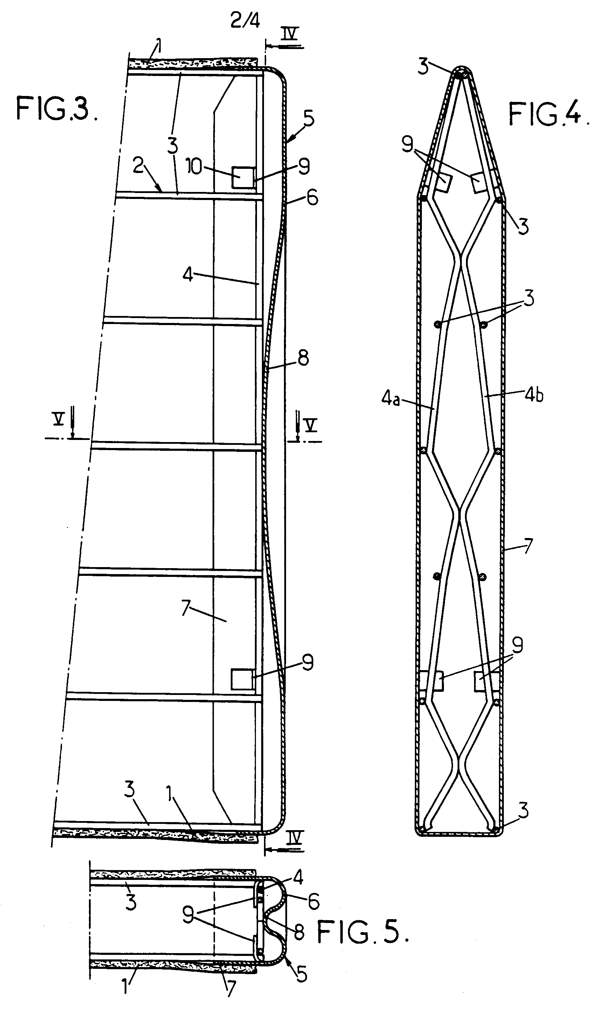

Toutefois, de préférence, la base 1c de la manche en U 1 est resserrée sur elle-même, par tous moyens mécaniques appropriés non représentés sur les figures 1 et 2, mais dont un exemple est décrit ci-dessous en référence aux figures 3 à 8, et pouvant simultanément contribuer au support et au positionnement de la manche en U 1 par sa base 1c sur le fond 17. La base 1c resserrée forme alors un joint suffisamment étanche au gaz entre les deux tronçons de filtration tubulaire 1a et 1b, pour empêcher que le gonflage d'un tronçon 1a ou 1b par de l'air empoussiéré, suite à son percement, ne se communique à l'autre tronçon 1b ou 1a. Il est alors possible et aisé de boucher temporairement l'ouverture 1f du tronçon 1a ou 1b gonflé, pour ne pas avoir à retirer la manche en U 1 correspondante, dont l'autre tronçon de filtration 1b ou 1a reste efficace au filtrage.

La manche en U 1 est supportée entre la plaque 22 et le fond 17 par une armature ajourée, servant également à la mise en place et au retrait par passage dans le trou 23. Cette armature peut être simplement constituée de deux mannequins grillagés, de structure et de forme connues, qui sont chacun emmanchés dans l'un respectivement des tronçons tubulaires 1a et 1b, les deux mannequins pouvant être déplacés conjointement par une canne ou tige centrale, se fixant rigidement mais de manière amovible à chaque mannequin, pour la mise en place et le retrait.

La manche en U 1 ainsi réalisée est très économique et d'une mise en oeuvre très simple.

Sur les figures 3 à 5, on retrouve en 1 une manche horizontale de filtrage de gaz empoussiéré au niveau de la paroi filtrante de la partie d'extrémité arrière d'un tronçon de filtration tubulaire. La paroi filtrante de chaque tronçon de la manche 1, de section transversale sensiblement ovale très aplatie et orientée verticalement, est emmanchée sur un mannequin grillagé 2. Ce mannequin 2 est constitué de fils métalliques longitudinaux 3 parallèles, qui sont soudés à des cadres transversaux 4, régulièrement espacés, et constitués chacun de deux fils métalliques 4a et 4b ondulés, en appui l'un contre l'autre par les sommets internes des ondulations, et dont les parties supérieures sont inclinées en forme de toit.

Un embout 5, comprenant un fond 6 raccordé par un arrondi sur toute sa périphérie à une jupe 7, sensiblement perpendiculaire au plan général du fond 6, est emboîté élastiquement par sa jupe 7 autour de l'extrémité arrière du mannequin grillagé 2. Le fond 6 présente une forme qui enveloppe le cadre 4 d'extrémité arrière du mannequin 2, c'est-à-dire une forme rectangulaire à grande longueur et petite largeur, se prolongeant par un triangle isocèle à son extrémité supérieure. Une nervure de raidissement 8 est ménagée de haut en bas dans la partie centrale du fond 6, en saillie du côté de la jupe 7, avec une profondeur décroissante du centre de la déformation vers ses extrémités. L'embout 5 est réalisé par emboutissage dans une tôle d'acier inoxydable de 0,8 mm d'épaisseur par exemple. L'embout 5 est emmanché élastiquement sur le mannequin 2 par insertion de sa jupe 7 entre le tronçon de manche 1 et le mannequin 2, jusqu'à la venue en butée de la nervure 8 contre le cadre 4 d'extrémité arrière du mannequin 2. Cette nervure 8 a pour effet d'améliorer l'emboîtement élastique de l'embout 5 sur le mannequin 2. L'embout 5 est maintenu en place par des pattes 9, pliées au montage et réalisées par des crevés 10 pratiqués dans la jupe 7. L'embout 5 est ainsi accroché sur le mannequin 2 par les pattes 9 repliées derrière les fils 4a et 4b du cadre d'extrémité arrière 4 du mannequin 2, par rapport au fond 6.

En variante, les pattes 9 peuvent être réalisées de manière à être emboîtées élastiquement sur le mannequin 2.

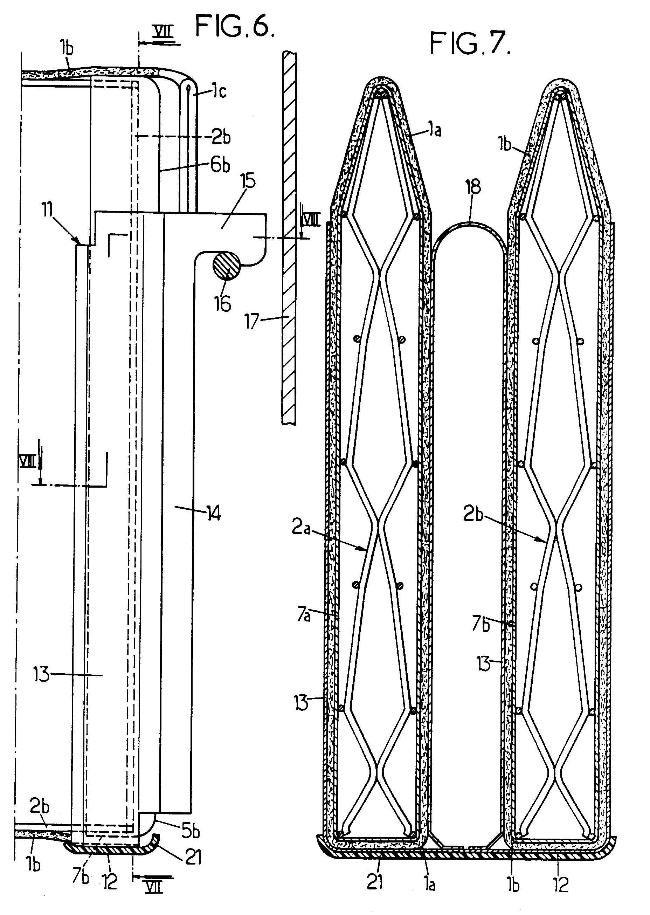

Sur les figures 6 à 8, on a représenté le dispositif de support, positionnement et fermeture étanche adapté à la partie arrière de la manche de filtrage en U, dont les deux tronçons de filtration tubulaires ont leur paroi emmanchée, pour chaque tronçon, sur l'un respectivement de deux mannequins, sur lesquels sont montés deux embouts 5, comme décrit ci-dessus en référence aux figures 3 à 5.

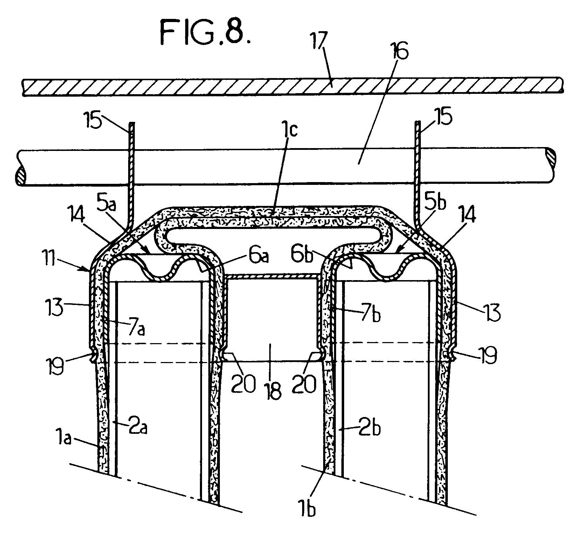

Sur la figure 8, on voit que la paroi d'un tronçon de filtration 1a de la manche en U est reliée à la paroi de l'autre tronçon de filtration 1b par une base 1c, qui est resserrée sur elle-même. Deux embouts 5a et 5b, identiques à l'embout 5 des figures 3 à 5, sont respectivement emboîtés élastiquement, comme décrit ci-dessus, sur l'extrémité arrière des mannequins (2a et 2b) logés dans les tronçons 1a et 1b.

Comme représenté sur les figures 6 à 8, le dispositif comprend également une épingle externe 11, en forme de U, avec une base 12 et deux branches 13 parallèles et élastiquement déformables. Cette épingle en U 11 est emboîtée élastiquement par ses branches 13 et sa base 12 autour des jupes 7a et 7b et des arrondis de raccordement aux fonds 6a et 6b des embouts 5a et 5b, ainsi qu'autour des parties correspondantes des tronçons 1a et 1b. Les parois des extrémités arrière des deux tronçons de filtration 1a et 1b sont ainsi pincées entre l'épingle externe 11 et l'embout 5a ou 5b correspondant. Pour améliorer la raideur de l'épingle externe 11, chaque branche 13 se prolonge, au-delà de la base 12 et vers la base 1c de la manche en U, par une aile 14 contre-coudée vers l'autre branche 13 et dont le bord supérieur est aménagé en crochet 15 d'accrochage et de positionnement du dispositif sur une barre rectiligne 16 de support et de positionnement liée au caisson de filtre, à proximité du fond 17 de ce caisson.

Comme la manche est en U, le dispositif comporte également une cale interne 18, élastiquement déformable, qui s'emboîte élastiquement dans l'épingle en U 11, entre les extrémités arrière des deux tronçons de filtration 1a et 1b engagées dans l'épingle en U 11, de sorte que ces parois des tronçons 1a et 1b soient pincées, avec une bonne étanchéité au gaz, entre l'embout correspondant 5a ou 5b, emboîté à l'intérieur, et, vers l'extérieur, la cale 18 et les deux branches 13 de l'épingle en U 11.

Comme l'épingle en U 11 et chaque embout 5a et 5b, la cale 18 est réalisée par emboutissage d'une tôle d'acier, afin de bénéficier de bonnes propriétés de déformation élastique, pour son emboîtement. Cette cale 18 est constituée d'une bande rectangulaire, dont la largeur correspond à la largeur de la base 12 de l'épingle 11, et qui est repliée sur elle-même, de manière à constituer un profilé en forme de O très allongé, arrondi à son extrémité supérieure, à deux faces latérales planes et parallèles, et dont la partie inférieure, constituée par le rapprochement des deux extrémités de la bande, est repliée à plat, mais ouverte en son centre selon sa génératrice, pour être appliquée contre la base 12 de l'épingle 11, comme représenté sur la figure 7.

Pour améliorer le pincement et la retenue étanche des parois des tronçons 1a et 1b de la manche entre, d'une part, les embouts 5a et 5b, et, d'autre part, l'épingle en U 11 et la cale interne 18, le bord des branches 13 de l'épingle 11, du côté opposé aux ailes 14, présente une déformation en saillie vers l'intérieur formant une nervure 19, et le bord en regard des deux côtés de la cale interne 18 présente une déformation analogue en saillie vers l'extérieur formant également une nervure 20, de sorte que ces nervures 19 et 20 soient en saillie vers les jupes 7a et 7b des embouts 5a et 5b, légèrement en avant du bord libre de ces jupes, pour assurer une meilleure retenue des parois des tronçons 1a et 1b. De plus, les nervures 19 et 20 rigidifient les bords de l'épingle 11 et de la cale 18, et évitent de déchirer la manche 1.

Enfin, un patin de glissement 21, par exemple en polytétrafluoroéthylène (PFTE), est fixé sous la base 12 de l'épingle 11. Ce patin 21, relevé vers l'arrière, et, éventuellement, latéralement autour de la base des branches 13, glisse sur les extrémités supérieures des deux tronçons de filtration tubulaires d'une manche en U inférieure, afin de faciliter le guidage et le déplacement de la manche, lors de sa mise en position ou de son retrait. Ce patin 21 procure également l'assurance que les crochets 15 de l'épingle 11 du dispositif seront accrochés sur la barre 16 située au bon niveau horizontal.

Dans le cas où le dispositif de support, positionnement et fermeture étanche doit être utilisé sur une manche à un seul tronçon de filtration tubulaire, la cale centrale 18 n'est, bien entendu, pas utile, et l'épingle en U 11 doit être aménagée en conséquence, par un rapprochement de ses branches 13 et ailes 14, de sorte que ses branches 13 assurent le pincement élastique de la paroi filtrante de la manche contre les deux côtés opposés de la jupe 7 de l'embout 5 correspondant.

## Revendications

1. Filtre à manches, comprenant plusieurs manches (1) de filtrage de gaz empoussiéré, s'étendant dans une enceinte entre une plaque (22) à trous (23) de l'enceinte et des moyens (11, 16) de support et positionnement voisins du fond (17) de l'enceinte, et disposées sensiblement transversalement à un courant de gaz empoussiéré pénétrant dans l'enceinte, chaque manche (1) tubulaire comportant une paroi de filtration souple, perméable au gaz mais retenant des poussières transportées par le gaz qui pénètre dans la manche (1) et s'écoule dépoussiéré dans celle-ci jusqu'à une ouverture (1f) d'extrémité de la paroi qui débouche dans un trou (23) de la plaque (22) à trous, caractérisé en ce qu'au moins une manche (1) est constituée d'un tube en U et est montée dans l'enceinte de sorte qu'elle présente deux tronçons tubulaires de filtration (1a, 1b), sensiblement parallèles et reliés l'un à l'autre par une base (1c) disposée vers le fond (17) de l'enceinte, et en ce que les ouvertures (1f) d'extrémité des deux tronçons tubulaires de filtration (1a, 1b) de chaque manche en U (1) débouchent côte à côte dans un même trou (23) de la plaque à trous (22).

2. Filtre à manches selon la revendication 1, caractérisé en ce que le tube de chaque manche en U (1) est coupé à la longueur voulue dans un tube continu, sans bourrelet, puis plié en U à la forme voulue.

3. Filtre à manches selon la revendication 2, caractérisé en ce que chaque manche en U (1) est découpée dans un tube de section transversale sensiblement ovale ou circulaire.

4. Filtre à manches selon l'une quelconque des revendications précédentes, caractérisé en ce que la base (1c) de chaque manche en U (1) est suffisamment resserrée pour former un joint relativement étanche au gaz entre ses deux tronçons tubulaires de filtration (1a, 1b).

5. Filtre à manches selon l'une quelconque des revendications précédentes, caractérisé en ce que chaque manche en U (1) est supportée entre ladite plaque à trous (22) et lesdits moyens de support et de positionnement (11, 16) voisins du fond (17) de l'enceinte par une armature constituée de deux mannequins (2a, 2b) ajourés introduits chacun dans l'un respectivement des deux tronçons tubulaires de filtration (1a, 1b).

6. Filtre à manches selon la revendication 5, caractérisé en ce que pour chaque manche en U (1), lesdits moyens de support et de positionnement comprennent au moins une barre (16) de support, du côté du fond (17) de l'enceinte du filtre, et un dispositif de support, positionnement et fermeture étanche de la base (1c) de la manche en U (1), ledit dispositif comprenant :
- pour chaque tronçon de filtration (1a, 1b), un embout (5b) comportant un fond (6a, 6b) et une jupe périphérique (7a, 7b), qui s'emboîte élastiquement par sa jupe (7a, 7b) autour de l'extrémité arrière du mannequin (2a, 2b) en s'insérant entre ce dernier et le tronçon de filtration (1a, 1b), et dont le fond (6a, 6b) constitue un fond de fermeture étanche au gaz de l'extrémité arrière dudit tronçon de filtration (1a, 1b),
- une épingle externe (11), de structure sensiblement en U, qui s'emboîte élastiquement sur la base (1c) de la manche de filtrage (1), de sorte à pincer la paroi de l'extrémité arrière de chaque tronçon de filtration (1a, 1b) entre l'épingle (11) et l'embout (5a, 5b) correspondant, chaque branche (13) de l'épingle en U (11) présentant, du côté opposé à la manche de filtrage (1), des moyens (15) d'accrochage sur au moins une barre (16) de support et positionnement solidaire du fond (17) du filtre à manches.

7. Filtre à manches selon la revendication 6, caractérisé en ce qu'il comprend de plus, pour chaque manche en U (1), une cale interne (18) élastiquement déformable, s'emboîtant élastiquement dans l'épingle en U (11), entre les extrémités arrière des deux tronçons de filtration (1a, 1b) engagées dans l'épingle en U (11), de façon à pincer élastiquement lesdites extrémités arrière entre, à l'extérieur, l'épingle en U (11) et la cale (18), et, à l'intérieur, les embouts (5a, 5b) emboîtés dans lesdites extrémités arrière.

8. Filtre à manches selon la revendication 7, caractérisé en ce que la cale interne (18) est un profilé creux sensiblement en forme de O ouvert selon sa génératrice, dans sa partie tournée vers la base (12) de l'épingle en U (11).

9. Filtre à manches selon l'une quelconque des revendications 7 et 8, caractérisé en ce que la cale (18) élastiquement déformable s'engage dans l'épingle en U (11) jusqu'à venir en appui sur la base (12) de cette épingle (11).

10. Filtre à manches selon l'une quelconque des revendications 7 à 9, caractérisé en ce que le bord des branches (13) de l'épingle en U (11) et de la cale élastique (18) qui est tourné du côté opposé aux moyens d'accrochage (15) de l'épingle (11), présente une nervure (19, 20) en saillie vers la jupe (7a, 7b) des embouts (5a, 5b), légèrement en avant du bord libre de cette jupe.

11. Filtre à manches selon l'une quelconque des revendications 6 à 10, caractérisé en ce qu'il comprend de plus un patin (21) de glissement fixé sous la base (12) de l'épingle en U (11).

12. Filtre à manches selon l'une quelconque des revendications 6 à 11, caractérisé en ce que chaque branche (13) de l'épingle en U (11) se prolonge, du côté opposé à la manche de filtrage (1), par une aile (14) contre-coudée en saillie vers l'autre branche (13) de l'épingle en U, et conformée en crochet (15) d'accrochage sur la barre (16) de support et positionnement.

13. Filtre à manches selon l'une quelconque des revendications 6 à 12, caractérisé en ce que chaque embout (5a, 5b) s'accroche sur le mannequin (2a, 2b) ajouré correspondant par au moins une patte (9) se logeant dans une lumière du mannequin (2a, 2b).

14. Filtre à manches selon la revendication 13, caractérisé en ce que chaque patte d'accrochage (9) est réalisée par un crevé (10) dans une jupe (7a, 7b) d'un embout (5a, 5b) et pliée au montage.

15. Filtre à manches selon l'une quelconque des revendications 6 à 14, caractérisé en ce que le fond (6a, 6b) de chaque embout (5a, 5b) présente une déformation centrale de raidissement (8), améliorant l'emboîtement élastique de l'embout (5a, 5b) sur ledit mannequin (2a, 2b) correspondant.

16. Filtre à manches selon l'une quelconque des revendications 6 à 15, caractérisé en ce que chaque embout (5a, 5b), l'épingle en U (11) et, le cas échéant, la cale centrale (18) sont réalisés en tôle emboutie.

## Claims

1. A bag filter comprising a plurality of bags (1) for filtering dust-laden gas and extending inside an enclosure between a perforated plate (22) of the enclosure having holes (23), and supporting and positioning means (11, 16) adjacent to a far end (17) of the enclosure, the bags being disposed substantially transversely to a flow of dust-laden gas that penetrates into the enclosure, each tubular bag (1) having a flexible filtering wall that is permeable to the gas but that retains the dust transported by the gas which penetrates into the bag (1) and flows in a filtered state therealong to an end opening (1f) of the wall which opens out into a hole (23) of the perforated plate (22), the filter being characterized in that at least one bag (1) is constituted by a U-shaped tube and is mounted in the enclosure in such a manner as to present two tubular filtering lengths (1a, 1b) that are substantially parallel and that are connected to each other via a base (1c) disposed towards the end (17) of the enclosure, and in that the end openings (1f) of the two tubular filtering lengths (1a, 1b) of each U-shaped bag (1) open out side by side in a same hole (23) of the perforated plate (22).

2. A bag filter according to claim 1, characterized in that the tube of each U-shaped bag (1) is cut to the desired length from a seamless and continuous tube, and is then folded to take up the desired U-shape.

3. A bag filter according to claim 2, characterized in that each U-shaped bag (1) is cut from a tube whose cross-section is substantially oval or circular.

4. A bag filter according to any preceding claim, characterized in that the base (1c) of each U-shaped bag (1) is sufficiently pinched to form a relatively gastight joint between the two tubular filtering lengths (1a, 1b) thereof.

5. A bag filter according to any preceding claim, characterized in that each U-shaped bag (1) is supported between said perforated plate (22) and said support and positioning means (11,16) adjacent to the end (17) of the enclosure by a frame made up of two perforated baskets (2a, 2b) each inserted in a respective one of the two tubular filtering lengths (1a, 1b).

6. A bag filter according to claim 5, characterized in that for each U-shaped bag (1), said support and positioning means comprise at least one support bar (16) adjacent to the far end (17) of the filter enclosure, and a support, positioning, and gastight closure device for the base (1c) of the U-shaped bag (1), said device comprising:
for each filtering length (1a, 1b), an endpiece (5b) comprising an end (6a, 6b) and a peripheral skirt (7a, 7b) which engages resiliently by means of its skirt (7a, 7b) around the rear end of the basket (2a, 2b) in being inserted between the basket and the filtering length (1a, 1b), with the end (6a, 6b) thereof constituting a gastight closure wall for the rear end of said filter length (1a, 1b); and
an outer pin (11) that is substantially U-shaped, and that engages resiliently on the base (1c) of the filter bag (1) in such a manner as to pinch the wall of the rear end of each filter length (1a, 1b) between the pin (11) and the corresponding endpiece (5a, 5b), each branch (13) of the U-shaped pin (11) having hooking means (15) on its side facing away from the filter bag (1), which hooking means (15) are suitable for engaging on at least one support and positioning bar (16) secured to the end (17) of the bag filter.

7. A bag filter according to claim 6, characterized in that it further includes, for each U-shaped bag (1), an elastically deformable inner spacer (18) that engages resiliently inside the U-shaped pin (11) between the rear ends of the two filter lengths (1a, 1b) engaged in the U-shaped pin (11) so as to pinch said rear ends resiliently between, on the outside, the U-shaped pin (11) and the spacer (18), and on the inside the endpieces (5a, 5b) mounted inside said rear ends.

8. A bag filter according to claim 7, characterized in that the inner spacer (18) is a hollow section member that is substantially in the form of an O-shape that is split along a generator line in its portion facing the base (12) of the U-shaped pin (11).

9. A bag filter according to claim 7 or 8, characterized in that the elastically deformable spacer (18) is engaged in the U-shaped pin (11) so as to come into abutment against the base (12) of said pin (11).

10. A bag filter according to any one of claims 7 to 9, characterized in that the edges of the branches (13) of the U-shaped pin (11) and of the resiliently spacer (18) facing away from the hooking means (15) of the pin (11) are provided with respective ribs (19, 20) projecting towards the skirts (7a, 7b) of the endpieces (5a, 5b), and disposed slightly in front of the free edges of said skirts.

11. A bag filter according to any one of claims 6 to 10, characterized in that it further includes a sliding shoe (21) fixed beneath the base (12) of the U-shaped pin (11).

12. A bag filter according to any one of claims 6 to 11, characterized in that each branch (13) of the U-shaped pin (11) extends away from the filter bag (1) in the form of a folded flat (14) projecting towards the other branch (13) of the U-shaped pin, and shaped to provide the hook (15) for hooking on the support and positioning bar (16).

13. A bag filter according to any one of claims 6 to 12, characterized in that each endpiece (5a, 5b) is fastened to the corresponding perforated basket (2a, 2b) by means of at least one tab (9) that is received in an opening of the basket (2a, 2b).

14. A bag filter according to claim 13, characterized in that each fastening tab (9) is made by punching out a portion (10) from the skirt (7a, 7b) of an endpiece (5a, 5b) and is folded on assembly.

15. A bag filter according to any one of claims 6 to 14, characterized in that the end (6a, 6b) of each endpiece (5a, 5b) has a central stiffening deformation (8), thereby improving the resilient engagement of the endpiece (5a, 5b) on said corresponding basket (2a, 2b).

16. A bag filter according to any one of claims 6 to 15, characterized in that each endpiece (5a, 5b), the U-shaped pin (11), and where applicable, the central spacer (18) are all stamped out from metal sheet.

## Patentansprüche

1. Beutelfilter mit mehreren Beutein (1) zum Filtern von staubhaltigem Gas, der sich in einem Rahmen zwischen einer Rahmenplatte (22) mit Löchern (23) und dem Rahmenboden (17) benachbarten Trag- und Positioniermitteln (11, 16) erstreckt, die im wesentlichen quer zu einem in den Rahmen eintretenden, staubhaltigen Gasstrom angeordnet sind, wobei jeder schlauchförmige Beutel (1) eine biegsame Filtrierwand aufweist, die gasdurchlässig ist, jedoch Staub zurückhält, der von dem Gas transportiert wird, das in den Beutel (1) eindringt und entstaubt in diesem bis zu einer in ein Loch (23) der Lochplatte (22) einmündenden Öffnung (1f) am Ende der Wand weiterströmt, dadurch gekennzeichnet, daß wenigstens ein Beutel (1) aus einem U-förmigen Schlauch gebildet und in dem Rahmen gelagert ist, so daß er zwei im wesentlichen parallele, schlauchförmige Filtrierabschnitte (1a, 1b) aufweist, die durch einen zum Rahmenboden (17) hin angeordneten Basisabschnitt (1c) miteinander verbunden sind, und daß die Endöffnungen (1f) der beiden schlauchförmigen Filtrierabschnitte (1a, 1b) jedes U-förmigen Beutels (1) nebeneinander in dasselbe Loch (23) der Lochplatte (22) einmünden.

2. Beutelfilter nach Anspruch 1, dadurch gekennzeichnet, daß der Schlauch jedes U-förmigen Beutels (1) aus einem fortlaufenden Schlauch ohne Wulst auf die gewünschte Länge geschnitten und dann zu der gewünschten Form U-förmig gefaltet wird.

3. Beutelfilter nach Anspruch 2, dadurch gekennzeichnet, daß jeder U-förmige Beutel (1) aus einem Schlauch mit im wesentlichen ovalem oder kreisförmigem Querschnitt geschnitten wird.

4. Beutelfilter nach einem der vorhergehenden Ansprüche, dadurch gekennzeichnet, daß der Basisabschnitt (1c) jedes U-förmigen Beutels (1) ausreichend verengt ist, um zwischen seinen beiden schlauchförmigen Filtrierabschnitten (1a, 1b) eine verhältnismäßig gasdichte Verbindung zu bilden.

5. Beutelfilter nach einem der vorhergehenden Ansprüche, dadurch gekennzeichnet, daß jeder U-förmige Beutel (1) zwischen der Lochplatte (22) und den dem Rahmenboden (17) benachbarten Trag- und Positioniermitteln (11, 16) über eine Aussteifung aus zwei durchbrochenen Streben (2a, 2b) gelagert ist, von denen jede in jeweils einen der beiden schlauchförmigen Filtrierabschnitte (1a, 1b) eingeführt ist.

6. Beutelfilter nach Anspruch 5, dadurch gekennzeichnet, daß für jeden U-förmigen Beutel (1) die Trag- und Positioniermittel wenigstens eine Tragstange (16) auf der Seite des Rahmenbodens (17) des Filters und eine Vorrichtung zum Tragen, Positionieren und dichten Verschließen des Basisabschnitts (1c) des U-förmigen Beutels (1) umfassen, wobei die Vorrichtung umfaßt:
- für jeden Filtrierabschnitt (1a, 1b) ein Ansatzstück (5b) mit einem Boden (6a, 6b) und einer sich über den Umfang erstreckenden Schürze (7a, 7b), das mittels seiner Schürze (7a, 7b) das hintere Ende der Strebe (2a, 2b) elastisch umgreift, indem es sich zwischen dieses und den Filtrierabschnitt (1a, 1b) einfügt, und dessen Boden (6a, 6b) einen Boden zum gasdichten Verschließen des hinteren Endes des Filtrierabschnitts (1a, 1b) bildet,
- eine äußere Klammer (11) mit im wesentlichen U-förmigem Aufbau, die den Basisabschnitt (1c) des Filtrierbeutels (1) elastisch umgibt, so daß die Wand des hinteren Endes jedes Filtrierabschnitts (1a, 1b) zwischen der Klammer (11) und dem entsprechenden Ansatzstück (5a, 5b) verklemmt wird, wobei jeder Schenkel (13) der U-förmigen Klammer (11) auf der dem Filtrierbeutel (1) gegenüberliegenden Seite Mittel (15) zum Einhängen an wenigstens einer mit dem Boden (17) des Beutelfilters einstückigen Trag- und Positionierstange (16) aufweist.

7. Beutelfilter nach Anspruch 6, dadurch gekennzeichnet, daß er weiterhin für jeden U-förmigen Beutel (1) einen elastisch verformbaren Innenkeil (18) aufweist, der sich elastisch in die U-förmige Klammer (11) zwischen den hinteren, in der U-förmigen Klammer (11) eingebundenen Enden der beiden Filtrierabschnitte (1a, 1b) einfügt, so daß die hinteren Enden außen zwischen der U-förmigen Klammer (11) und dem Keil (18) und innen zwischen den in die hinteren Enden eingefügten Ansatzstücken (5a, 5b) elastisch verklemmt werden.

8. Beutelfilter nach Anspruch 7, dadurch gekennzeichnet, daß der Innenkeil (18) ein Hohlprofil bildet, das im wesentlichen die Form eines über seine Mantellinie in seinem der Basis (12) der U-förmigen Klammer (11) zugewandten Abschnitt offenen O hat.

9. Beutelfilter nach einem der Ansprüche 7 und 8, dadurch gekennzeichnet, daß der elastisch verformbare Keil (18) in die U-förmige Klammer (11) so weit eingreift, bis er zur Anlage an der Basis (12) dieser Klammer (11) kommt.

10. Beutelfilter nach einem der Ansprüche 7 bis 9, dadurch gekennzeichnet, daß der Rand der Schenkel (13) der U-förmigen Klammer (11) und des elastischen Keils (18), der der den Mitteln zum Einhängen (15) der Klammer (11) entgegengesetzten Seite zugewandt ist, eine zu der Schürze (7a, 7b) der Ansatzstücke (5a, 5b) zurückspringende Nut (19, 20) aufweist, und zwar geringfügig vor der freien Kante dieser Schürze.

11. Beutelfilter nach einem der Ansprüche 6 bis 10, dadurch gekennzeichnet, daß er weiterhin einen unter der Basis (12) der U-förmigen Klammer (11) befestigten Gleitschuh (21) umfaßt.

12. Beutelfilter nach einem der Ansprüche 6 bis 11, dadurch gekennzeichnet, daß jeder Schenkel (13) der U-förmigen Klammer (11) sich auf der dem Filtrierbeutel (1) entgegengesetzten Seite über einen zu dem anderen Schenkel (13) der U-förmigen Klammer hin schräg abgewinkelten Flügel (14) fortsetzt, der in einen Haken (15) zum Einhängen an der Trag- und Positionierstange (16) übergeht.

13. Beutelfilter nach einem der Ansprüche 6 bis 12, dadurch gekennzeichnet, daß jedes Ansatzstück (5a, 5b) mit der entsprechenden durchbrochenen Strebe (2a, 2b) über wenigstens eine in einem Langloch der Strebe (2a, 2b) aufgenommenen Zunge (9) verbunden ist.

14. Beutelfilter nach Anspruch 13, dadurch gekennzeichnet, daß jede Verbindungszunge (9) durch eine Hinterschneidung (10) in einer Schürze (7a, 7b) eines Ansatzstücks (5a, 5b) ausgebildet und zur Befestigung umgebogen ist.

15. Beutelfilter nach einem der Ansprüche 6 bis 14, dadurch gekennzeichnet, daß der Boden (6a, 6b) jedes Ansatzstücks (5a, 5b) zur Verbesserung der elastischen Anbindung des Ansatzstücks (5a, 5b) an die entsprechende Strebe (2a, 2b) eine mittlere Versteifüngseinziehung (8) aufweist.

16. Beutelfilter nach einem der Ansprüche 6 bis 15, dadurch gekennzeichnet, daß jedes Ansatzstück (5a, 5b), die U-förmige Klammer (11) und gegebenenfalls der Mittelkeil (18) aus tiefgezogenem Blech ausgebildet sind.
